# EUROPÄISCHE PATENTSCHRIFT

(11) **EP 0 803 317 B1**
(45) Veröffentlichungstag und Bekanntmachung des Hinweises auf die Patenterteilung: **30.01.2002**
(21) Anmeldenummer: 97102969.9
(22) Anmeldetag: 24.02.1997
(51) Int. Cl.: B23Q 1/25, B23Q 11/08

(54) **Werkzeugmaschine**
Machine tool
Machine outil

(30) Priorität: 25.04.1996 DE 19616433
(43) Veröffentlichungstag der Anmeldung: 29.10.1997
(73) Patentinhaber: CHIRON-WERKE GMBH & CO. KG, 78532 Tuttlingen (DE)
(72) Erfinder: Haninger, Rudolf, 78606 Seitingen (DE)
(74) Vertreter: Otten, Hajo, Dr.-Ing.

(56) Entgegenhaltungen:
- EP-A- 0 194 173
- EP-A- 0 712 683
- DE-A- 2 946 825
- US-A- 4 705 187
- US-A- 5 479 840

## Beschreibung

Die vorliegende Erfindung betrifft eine Werkzeugmaschine mit einem eine Aufspannfläche für zu bearbeitende Werkstücke aufweisenden Werkstücktisch, einem in einem Arbeitsraum oberhalb des Werkstücktisches relativ zu diesem über eine Verschiebemechanik verfahrbaren Spindelkopf mit einer Werkzeuge zur Bearbeitung der Werkstücke aufnehmenden Spindel, und drei orthogonal zueinander bewegbaren Schlitten in der Verschiebemechanik, von denen der zweite Schlitten verfahrbar an dem ersten und der dritte Schlitten verfahrbar an dem zweiten Schlitten gelagert ist, wobei der Spindelkopf mit dem dritten Schlitten verbunden und der erste Schlitten oberhalb der Aufspannfläche angeordnet ist.

Eine derartige Werkzeugmaschine ist aus der EP 0 194 173 A2 bekannt.

Bei einer allgemein bekannten Werkzeugmaschine ist der Spindelkopf in drei zueinander orthogonalen Koordinatenrichtungen, nämlich der x-, der y- sowie der z-Richtung, in einem Arbeitsraum oberhalb des Werkstücktisches verfahrbar.

Die dazu vorgesehene Verschiebemechanik umfaßt als ersten Schlitten einen x-Schlitten, der im Bereich der Aufspannfläche des Werkstücktisches, vorzugsweise unterhalb der Aufspannfläche, angeordnet ist. Auf diesem x-Schlitten ist als zweiter Schlitten der y-Schlitten angeordnet, der quer zu dem x-Schlitten verfahrbar ist, so daß der x- und der y-Schlitten eine Ebene aufspannen, die parallel zu der Aufspannfläche liegt.

Auf dem y-Schlitten ist ein Ständer angeordnet, der die gesamte Höhe des Arbeitsraumes überstreicht und an seinem oberen Ende den dritten Schlitten, nämlich den z-Schlitten, trägt, an dem der Spindelkopf befestigt ist, der somit von oben in den Arbeitsraum eintaucht. Mit anderen Worten, der Ständer verläuft an der von der Bedienerseite her gesehen hinteren Wand des Arbeitsraumes.

Je nach Höhe des Arbeitsraumes hat der Ständer eine relativ große Masse, so daß beim Verfahren des Spindelkopfes in x- oder y-Richtung der erzielbaren maximalen Beschleunigung kinematische Grenzen gesetzt sind. Das Beschleunigen sowie Abbremsen des Ständers kann nicht in beliebig kurzen Zeitspannen realisiert werden.

Die bekannte Werkzeugmaschine weist weiter eine Verkleidung auf, die zum einen die Werkzeugmaschine nach außen abdeckt und zum anderen für eine Auskleidung des Arbeitsraumes sorgt, um die Verschiebemechanik vor Spänen sowie Bohr- und Kühlöl zu schützen. Die Schlitten und Führungsschienen sowie der Ständer sind dabei durch Teleskopabdeckungen geschützt, die sozusagen längenveränderliche Abdeckungen bilden, so daß die von der Verschiebemechanik in den Arbeitsraum hineinragenden Teile der Werkzeugmaschine nicht durch Schlitze in der Verkleidung hindurchgehen müssen, durch die Späne und Kühl- sowie Bohrwasser in die Verschiebemechanik gelangen könnten.

Die Teleskopabdeckungen umfassen übereinanderschiebbare, U-förmige Blechteile, die z.B. beidseits des x-Schlittens angeordnet sind und die Führungen für diesen Schlitten übergreifen und somit vor Verschmutzungen schützen.

Ingesamt sind bei der bekannten Werkzeugmaschine große Flächen abzudichten, für die die längenveränderlichen Teleskopabdeckungen vorgesehen sind.

Bei den Teleskopabdeckungen ist zum einen ihre große Masse von Nachteil, die nicht nur konstruktiv sondern auch wegen der großen abzudichtenden Flächen bedingt ist, so daß auch die Teleskopabdeckungen zu den oben bereits erwähnten Beschleunigungsproblemen beitragen. Ferner ist von Nachteil, daß die Blechteile insbesondere bei hohen Verfahrgeschwindigkeiten beim Zusammenschieben sowie Auseinanderfahren aneinander schlagen. Diese Schläge stellen nicht nur eine Lärmbelästigung dar, sie beeinträchtigen wegen der damit einhergehenden Erschütterungen auch die Bearbeitungsgenauigkeit der bekannten Werkzeugmaschine.

Aus der eingangs erwähnten EP 0 194 173 A2 ist eine Werkzeugmaschine bekannt, bei der ebenfalls drei orthogonal zueinander verfahrbare Schlitten vorgesehen sind. Der erste Schlitten erstreckt sich dabei quer über den gesamten Arbeitsraum und ist oberhalb der Aufspannfläche angeordnet. An dem ersten Schlitten ist ein senkrecht dazu verfahrbarer zweiter Schlitten vorgesehen, der sich somit oberhalb des Arbeitsraumes verfahren läßt. An diesem zweiten Schlitten ist der den Spindelkopf tragende dritte Schlitten angeordnet.

Die an dem ersten Schlitten vorgesehene Führung des zweiten Schlittens befindet sich auf diese Weise unmittelbar im Arbeitsraum der bekannten Werkzeugmaschine. Abdeckungen für die Führungen der drei Schlitten sind nicht gezeigt.

Die DE 29 46 825 beschreibt eine rolloartig ausgebildete Abdeckung zum Schutz von Führungsbahnen an einer Werkzeugmaschine. Die Rolloabdeckung ist einen Endes an einem verfahrbaren Schlitten und anderen Endes an einer Trommel befestigt, auf die sie unter Vorspannung einer Torsionsfeder aufgewickelt ist.

Diese Rolloabdeckungen sollen den Nachteil einer relativ kurzen Lebensdauer haben, da sich beim Verfahren des Schlittens ständig eine Änderung in der Spannung der Abdeckung ergibt. Um dieses Problem zu lösen, schlägt diese Druckschrift vor, die Aufwickelwelle in der Trommel mit dem Antrieb des Schlittens zu verbinden, so daß beim Verfahren des Schlittens durch Drehen der Welle die Vorspannung der Torsionsfeder angepaßt wird.

Aus der nicht vorveröffentlichten EP 0 712 683 A2, die als benannte Vertragsstaaten AT, CH, DE, FR, GB, IT und LI aufzählt, ist eine Werkzeugmaschine bekannt, bei der drei orthogonal zueinander angeordnete Schlitten vorgesehen sind. Der erste Schlitten ist hinter dem Arbeitsraum und oberhalb der Aufspannfläche angeordnet. Diese Druckschrift ist Stand der Technik im Sinne von Artikel 54(3) EPÜ für die Vertragsstaaten DE, FR, GB und IT der vorliegenden Anmeldung.

Vor diesem Hintergrund ist es Aufgabe der vorliegenden Erfindung, die eingangs genannte Werkzeugmaschine derart weiterzubilden, daß bei konstruktiv einfachem Aufbau und Erzielung einer guten Abdichtung des Arbeitsraumes insbesondere gegenüber der Verschiebemechanik ein schnelleres Verfahren des Spindelkopfes möglich wird.

Bei der eingangs genannten Werkzeugmaschine wird diese Aufgabe dadurch gelöst, daß der erste Schlitten hinter dem Arbeitsraum und an dem ersten Schlitten zu beiden Seiten je eine Rolloabdeckung angeordnet ist, die sich beim Verfahren des ersten Schlittens auf- bzw. abwickelt und mit ihrer Rollofläche den Arbeitsraum abdeckt.

Die der Erfindung zugrunde liegende Aufgabe wird auf diese Weise vollkommen gelöst.

Die Erfinder der vorliegenden Anmeldung haben nämlich erkannt, daß sich dadurch, daß der x-Schlitten und somit auch der y-Schlitten hochgelegt werden, eine insgesamt kompakte Anordnung erzielen läßt, bei der der Ständer nur eine geringe Höhe aufweisen muß. Mit der geringeren Höhe des Ständers geht jedoch auch eine deutlich geringere Masse einher, so daß bei der neuen Werkzeugmaschine größere Beschleunigungen möglich sind.

Ein weiterer Vorteil dieser völlig neuen Konstruktion liegt in der Trennung zwischen der Verschiebemechanik einerseits und dem Arbeitsraum andererseits. Die gesamte Verschiebemechanik kann oberhalb und hinter dem Arbeitsraum angebracht werden, so daß die Spindel vor sowie unterhalb des x-Schlittens in den Arbeitsraum von oben eintauchen kann. Diese Konstruktion ermöglicht es jedoch, daß der größte Teil des Arbeitsraumes durch feste Abdeckungen abgedichtet werden kann, so daß im wesentlichen nur noch der obere Bereich des Arbeitsraumes über längenveränderliche Abdeckungen zu schützen ist. Dies bedeutet jedoch, daß auch die Masse der zu bewegenden Abdeckungen deutlich geringer wird, was weiter dazu beiträgt, daß bei der neuen Werkzeugmaschine mit deutlich größeren Beschleunigungen/Geschwindigkeiten beim Verfahren des Spindelkopfes gearbeitet werden kann.

Bei der Rolloabdeckung ist dabei von Vorteil, daß bei sehr einfacher Konstruktion eine längenveränderliche Abdeckung mit sehr geringem Gewicht eingesetzt wird, wodurch sich die zu bewegende Masse weiter reduziert, was sich vorteilhaft auf das Beschleunigungsverhalten des Spindelkopfes auswirkt. Bei bekannten Werkzeugmaschinen mußten die längenveränderlichen Abdeckungen im Bereich der Aufspannfläche angeordnet werden, also gerade dort, wo die Bearbeitung der Werkstücke erfolgt und somit eine große Anzahl von Spänen anfällt, die zum Teil mit großer Geschwindigkeit und Wucht von dem Werkstück bzw. dem Werkzeug weggeschleudert werden. Um diesen Belastungen standzuhalten, mußten die bekannten Abdeckungen mechanisch sehr stabil sein.

Bei der neuen Konstruktion, bei der nur noch eine Abdeckung des Arbeitsraumes im wesentlichen nach oben erforderlich ist, sind an die mechanische Festigkeit der längenveränderlichen Abdeckungen deutlich geringere Anforderungen zu stellen, denn sowohl die Zahl als auch die Geschwindigkeit der in diesem Bereich des Arbeitsraumes gelangenden Späne ist deutlich geringer als es im Bereich der Aufspannfläche der Fall ist.

Die neue Konstruktion mit dem hochgelegten x-Schlitten, auf dem selbstverständlich dann auch der y-Schlitten sitzt, erlaubt also den Einsatz von deutlich leichteren und einfacheren längenveränderlichen Abdeckungen in Form von Rolloabdeckungen. Diese Maßnahme reduziert nicht nur die Kosten der neuen Werkzeugmaschine, sie ermöglicht wegen des verglichen mit dem Stand der Technik sehr viel geringeren Gewichtes auch ein schnelleres Verfahren des Spindelkopfes.

In einer Weiterbildung ist es dann bevorzugt, wenn der erste Schlitten oberhalb des Arbeitsraumes angeordnet ist.

In einer Weiterbildung ist es dann bevorzugt, wenn zu beiden Seiten des ersten Schlittens je eine bis zum oberen Ende des Arbeitsraumes reichende Wange angeordnet ist, an der jeweils die zugeordnete Rolloabdeckung mit ihrem freien Ende befestigt ist, wobei die Rolloabdeckung sich jeweils auf eine jeweils an einer äußeren Seite des Arbeitsraumes angeordnete Rolle aufwickelt.

Bei dieser Maßnahme ist von Vorteil, daß die Rolle selbst ortsfest sein kann, so daß lediglich die Rollobahn selbst verfahren wird. Dies trägt dazu bei, daß die beim Verfahren des Spindelkopfes zu bewegende Masse noch einmal reduziert wird.

Weiter ist es bevorzugt, wenn der Spindelkopf von einem an dem zweiten Schlitten befestigten Kasten umgeben ist, aus dem der Spindelkopf nach unten zumindest teilweise ausfahrbar ist, und der zwischen den Wangen in Richtung der Bewegung des zweiten Schlittens in den Arbeitsraum verfahrbar ist.

Diese Maßnahme ist konstruktiv von Vorteil, an den ersten Schlitten sind zwei z.B. senkrechte Wangen angeordnet, zwischen denen der Kasten in y-Richtung vor- und zurückläuft. Beidseits der Wangen, die in x-Richtung mit dem x-Schlitten mitlaufen, sind die beiden Rolloabdeckungen vorgesehen, die sich beim Verfahren des Schlittens in x-Richtung entsprechend auf- bzw. abwickeln. Beim Verfahren des Spindelkopfes in y-Richtung bleiben die Rolloabdeckungen dagegen unbeeinflußt, der Kasten läuft vielmehr zwischen den beiden Wangen hindurch.

Dabei ist es bevorzugt, wenn die Wangen jeweils einen Abstreifer aufweisen, der an dem fahrenden Kasten anliegt.

Hier ist von Vorteil, daß sich eine gute Abdichtung des Arbeitsraumes auch in diesem Bereich ergibt, obwohl aus den oben genannten Gründen in diesem Bereich eine geringere Anforderung an die Qualität der Abdichtung zu stellen ist.

Weiter ist es bevorzugt, wenn die Wangen sowie die Rolloflächen schräg nach oben und vorne verlaufen, so daß die Rolloabdeckungen den Arbeitsraum schräg nach oben und hinten abdecken.

Hier ist von Vorteil, daß durch diese geneigte Anordnung der Rolloabdeckungen die Dachabdeckung sozusagen gleich mit realisiert wird. Diese Maßnahme bietet somit konstruktive Vorteile, denn es sind keine Vorkehrungen für die Abdichtung zwischen einer Dachabdeckung und einer durch die Rolloabdeckungen bewirkten Abdeckung der Rückwand zu treffen.

Dabei ist es bevorzugt, wenn zwischen den Wangen an deren vorderen, oberen Enden eine Rolle einer weiteren Rolloabdeckung angeordnet ist, die mit ihrem freien Ende an dem Kasten geführt ist und mit ihrer Rollofläche für eine Abdichtung des Arbeitsraumes oberhalb des Kastens sorgt.

Hier ist von Vorteil, daß die "obere Lücke" zwischen den Wangen und oberhalb des Kastens nicht mit Blechen oder ähnlichen Teilen abgedichtet werden muß, sondern daß auch hierfür ein Rollo vorgesehen werden kann, so daß der Kasten insgesamt mit geringerer Höhe ausgelegt werden kann, also ein geringeres Gewicht aufweist. Diese Maßnahme trägt somit ebenfalls dazu bei, daß die bewegten Massen reduziert werden, der Spindelstock also schneller verfahren werden kann.

Dabei ist es bevorzugt, wenn das freie Ende der weiteren Rolloabdeckung an einer Abstreiferschiene befestigt ist, die höhenverschiebbar an dem Kasten gelagert sowie an den Wangen in deren Längsrichtung verschieblich geführt ist.

Hier ist von Vorteil, daß sich die Neigung der Rollofläche der oberen Rolloabdeckung nicht verändert, wenn der Kasten in y-Richtung verfahren wird. Wird der Kasten z.B. zwischen den Wangen nach vorne gefahren, so verschiebt sich die Abstreiferschiene an dem Kasten nach oben, da sie dem Verlauf der Wangen nach schräg oben folgen muß. Beim Zurückfahren des Kastens wird die Abstreiferschiene durch die gleichzeitige Führung an den Wangen sowie an dem Kasten wieder nach unten gezogen, wobei sie die Vorderseite des Kastens abstreift und damit von anhaftenden Spänen reinigt.

Ein weiterer Vorteil dieser Anordnung liegt darin, daß die obere Rolloabdeckung die Wangen seitlich überdecken kann, dabei aber an ihnen anliegt und somit für eine noch bessere Abdeckung des Arbeitsraumes in diesem Bereich sorgt.

Dabei ist es bevorzugt, wenn die Abstreiferschiene an zwei Nutensteinen befestigt ist, die jeweils in einer senkrechten Nut an dem Kasten gelagert sind und einen schrägen Schlitz aufweisen, in den jeweils eine Abstreiferschiene eingreift, die vorzugsweise seitlich verstellbar an der jeweiligen Wange befestigt ist.

Hier ist von Vorteil, daß die Zwangsführung der Abstreiferschiene der oberen Rolloabdeckung auf konstruktiv sehr einfache Weise realisiert wird. Der Nutenstein wird einerseits in der senkrechten Nut an dem Kasten geführt und gleitet andererseits auf der schräg verlaufenden Abstreiferschiene. Ein weiterer Vorteil bei dieser Konstruktion liegt darin, daß die Nut sich sozusagen selbst von Spänen etc. reinigt, da diese beim Zurückziehen des Kastens zwischen die Wangen von den nach unten fahrenden Nutensteinen herausgeschoben werden.

Allgemein ist es bevorzugt, wenn die Rolloabdeckungen sich unter Federspannung auf die jeweilige Rolle aufwickeln oder die Rollen antriebsmäßig mit dem zugeordneten Schlitten verbunden sind.

Die an sich bekannte Aufwicklung der Rolloabdeckungen unter Federspannung hat den Vorteil, daß diese Konstruktion sehr einfach aufgebaut ist, während der aktive "Antrieb" der Rolloabdeckungen z.B. über eine riemenmäßige Kopplung mit dem zugeordneten Schlitten für ein zuverlässiges Auf- und Abwickeln der Rolloabdeckungen sorgt.

Weiter ist es bevorzugt, wenn an dem dritten Schlitten ein Rohr befestigt ist, das den Spindelkopf umgibt und sich bei dessen Verfahren in den Arbeitsraum in einer passend ausgelegten unteren Öffnung in dem Kasten verschiebt.

Auch diese Maßnahme ist konstruktiv von Vorteil, denn sie ermöglicht einen einfachen Schutz der Spindel sowie der diese umgebenden Werkzeugwechsler vor Verschmutzung, wobei dieses Rohr ein sehr geringes Gewicht aufweist, so daß diese Maßnahme insgesamt auch zu einer Reduzierung der Masse und damit zu einer Erhöhung der Verfahrgeschwindigkeit beiträgt.

Dabei ist es bevorzugt, wenn ein unteres Abdeckblech des Kastens vorgesehen ist, das sich zwischen den Wangen nach hinten unter den ersten Schlitten erstreckt.

Hier ist von Vorteil, daß auch die "untere Lücke" zwischen den Wangen und unterhalb des Kastens auf konstruktiv einfache Weise geschlossen wird. Zwar wäre es auch möglich, hier eine zusätzliche Rolloabdeckung anzuordnen, da der Kasten nach unten jedoch wegen des ausfahrbaren Rohres in jedem Falle mit einem eine Öffnung aufweisenden Blech abgeschlossen werden muß, ist es konstruktiv hier einfacher, dieses Blech weiter nach hinten zu verlängern, so daß es den ersten Schlitten nach unten gegen den Arbeitsraum abdeckt. Es kann auch ein gesondertes Blech eingesetzt werden.

Insgesamt ist es bevorzugt, wenn eine Verkleidung vorgesehen ist, die den Arbeitsraum gegenüber der Werkzeugmaschine sowie nach außen abdichtet und zumindest eine seitliche Servicetür aufweist, die von außerhalb des Arbeitsraumes zugänglich ist.

Hier ist von Vorteil, daß sich eine konstruktiv sehr einfache, dichte Verkleidung im Bereich des Arbeitsraumes realisieren läßt, da jetzt im Gegensatz zum Stand der Technik nicht mehr unmittelbar aus dem Arbeitsraum heraus auf die Verschiebemechanik zugegriffen werden muß. Hierfür kann vielmehr eine Servicetür an der Seite der Werkzeugmaschine vorgesehen sein.

Dabei ist es weiter bevorzugt, wenn die Werkzeugmaschine über Rollen verfahrbar ist, die im Betrieb der Werkzeugmaschine unwirksam gemacht sind, und wenn die Werkzeugmaschine auf justierbaren Ständern steht.

Durch diese Maßnahme wird es möglich, die neue Werkzeugmaschine in einer Produktionslinie anzuordnen, wo auf engstem Raum mehrere Werkzeugmaschinen dicht an dicht nebeneinander stehen. Bei einer derartigen Anordnung von Werkzeugmaschinen in einer Produktionslinie muß es nämlich dennoch jederzeit möglich sein, auf die Maschinenmechanik zuzugreifen, was in der Regel über Serviceöffnungen im Arbeitsraum erfolgt. Diese Serviceöffnungen im Arbeitsraum bringen jedoch eine ganze Reihe von Abdichtproblemen mit sich, die dadurch beseitigt werden, daß die Servicetür in einer Seitenwand vorgesehen ist. Wegen der Verfahrbarkeit der Werkzeugmaschine ist jetzt die Wartung an solchen Werkzeugmaschinen mit besonders gut abgedichtetem Arbeitsraum möglich, weil die Werkzeugmaschine nämlich lediglich aus der Linie herausgefahren werden muß, damit die seitliche Servicetür zugänglich wird.

Diese Maßnahme ist damit bei der eingangs erwähnten, gattungsbildenden Werkzeugmaschine auch für sich genommen erfinderisch und vorteilhaft, besonders bevorzugt ist diese Maßnahme jedoch im Zusammenhang mit dem hochgesetzten x-Schlitten, da hier das geringere Gewicht des Ständers sowie die mit den oben erwähnten Maßnahmen einhergehenden weiteren Gewichtsreduzierungen das Verfahren der neuen Werkzeugmaschine erleichtern.

Dabei ist es bevorzugt, wenn zum Verfahren der Werkzeugmaschine die Rollen ausgefahren bzw. die Ständer eingezogen werden.

Diese Maßnahmen stellen alternative Konstruktionsvarianten dar, die sicherstellen, daß die Werkzeugmaschine im Betrieb nicht auf den Rollen sondern auf den justierbaren Ständern steht, also genau ausgerichtet werden kann.

Bei der neuen Werkzeugmaschine mit dem hochgelegten x-Schlitten sowie den leichten Rolloabdeckungen ist also besonders von Vorteil, daß beim Verfahren des Spindelkopfes nur geringe Massen bewegt werden müssen, so daß sich für den Spindelkopf sehr hohe Verfahrgeschwindigkeiten sowie Beschleunigungen erzielen lassen. Dieses neue Maschinenkonzept hat jedoch noch den weiteren Vorteil, daß sich der Arbeitsraum deutlich effektiver und einfacher abdichten läßt. Dies liegt vor allem daran, daß im unteren Bereich des Arbeitsraumes, wo die stärkste Verschmutzung und die größte mechanische Belastung der Verkleidung auftritt, feste Abdeckelemente verwendet werden können, während die längenveränderliche Abdeckungen erst im oberen Bereich des Arbeitsraumes erforderlich sind, wo die Anforderungen an die Belastbarkeit und Dichtheit der Abdeckungen jedoch deutlich geringer ist.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen :
- Fig. 1: eine schematische Seitenansicht der neuen Werkzeugmaschine;
- Fig. 2: eine Draufsicht auf den Arbeitsraum der Werkzeugmaschine aus Fig. 1 ;
- Fig. 3: eine Schnittdarstellung im Bereich des Kastens der neuen Werkzeugmaschine längs der Linie III-III aus Fig. 1; und
- Fig. 4: eine Schnittdarstellung längs der Linie IV-IV aus Fig. 3.

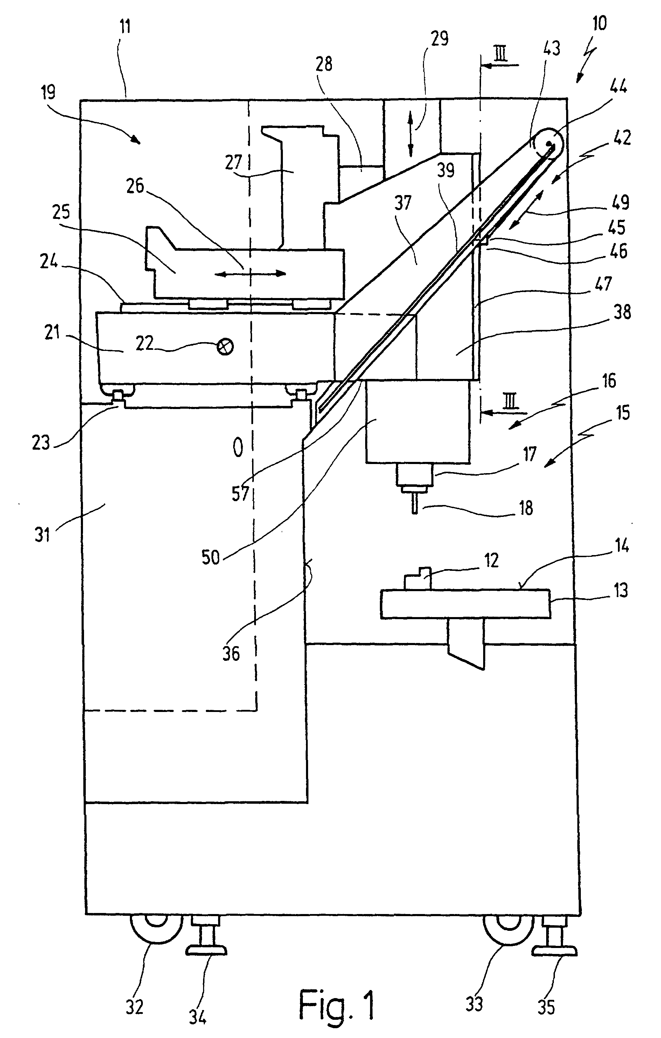

In Fig. 1 ist mit 10 eine Werkzeugmaschine bezeichnet, die eine Verkleidung 11 aufweist. Die Werkzeugmaschine 10 dient zum Bearbeiten von Werkstücken 12, die auf einem Werkstückstisch 13, der zu diesem Zweck eine Aufspannfläche 14 aufweist, aufgespannt werden.

Die Bearbeitung der Werkstücke 12 erfolgt in einem Arbeitsraum 15, in dem ein Spindelkopf 16 in drei Koordinatenrichtungen verfahrbar ist. Der Spindelkopf 16 weist eine Spindel 17 auf, die ein schematisch angedeutetes Werkzeug 18 trägt, mit dem das Werkstück 12 bearbeitet wird.

Zum Verfahren des Spindelkopfes 16 ist eine Verschiebemechanik 19 vorgesehen, die vollständig außerhalb des Arbeitsraumes 15 angeordnet ist.

Die Verschiebemechanik 19 umfaßt einen ersten Schlitten 21, der in Richtung einer bei 22 angedeuteten x-Koordinate auf Führungen 23 verschiebbar ist, die hinter dem Arbeitsraum 15 und deutlich oberhalb der Aufspannfläche 14 angeordnet sind. Die Führungen 23 liegen soweit oberhalb des üblichen Arbeitsraumes 15, daß die Spindel 17 mit dem Werkzeug 18 sozusagen vor und unterhalb des ersten Schlittens 21 arbeitet.

Auf dem ersten Schlitten 21 sind Führungen 24 für einen zweiten Schlitten 25 vorgesehen, der längs einer bei 26 angedeuteten y-Koordinate quer zu der x-Koordinate 22 verfahrbar ist.

Auf dem zweiten Schlitten 25 ist ein Ständer 27 angeordnet, an dem ein dritter Schlitten 28 in Richtung einer bei 29 angedeuteten z-Koordinate verschiebbar ist. An dem dritten Schlitten 28 ist der Spindelkopf 16 befestigt.

Über die Verschiebemechanik 19 kann der Spindelkopf 16 folglich in den drei zueinander orthogonalen Koordinaten x, y und z im Arbeitsraum 15 verfahren werden.

In Fig. 1 ist ferner noch schematisch die Lage einer Servicetür 31 in der Verkleidung 11 angedeutet, über die Bedienungspersonal von der Seite her auf die Verschiebemechanik 19 sowie andere Komponenten der Werkzeugmaschine 10 zugreifen kann. Damit die Werkzeugmaschine 10 in einer Produktionsreihe Seite an Seite mit anderen Werkzeugmaschinen angeordnet und dennoch problemlos gewartet werden kann, weist sie Rollen 32, 33 auf, über die sie verfahrbar ist. Neben den Rollen 32, 33 sind Ständer 34, 35 angeordnet, die in dem in Fig. 1 gezeigten Zustand nach unten über die Rollen 32, 33 hervorragen, so daß die Werkzeugmaschine 10 fest steht und bezüglich ihrer Lage ausgerichtet werden kann.

Wenn die Werkzeugmaschine 10 verfahren werden soll, werden die Ständer 34, 35 eingezogen bzw. die Rollen 32, 33 ausgefahren.

Der Arbeitsraum 15 ist in seinem unteren Bereich von einer bei 36 lediglich angedeuteten festen Verkleidung umgeben, die den Arbeitsraum 15 im unteren Bereich vollständig umgibt und verhindert, daß bei der Bearbeitung der Werkstücke 12 erzeugte Späne aus dem Arbeitsraum 15 heraus in den Bereich der Maschinen mechanik gelangen.

Im oberen Bereich des Arbeitsraumes 15 sind dagegen längenveränderliche Abdeckungen angeordnet, über die das "Eintauchen" des Spindelkopfes 16 in den Arbeitsraum 15 sowie das Verfahren in den drei orthogonalen Koordinatenrichtungen x, y und z ermöglicht wird.

Zu diesem Zweck sind an dem ersten Schlitten 21 zwei Wangen angeordnet, von denen in Fig. 1 lediglich eine linke Wange 37 zu sehen ist. Die Wange 37 ist ein Blechseitenteil, das sich in Fig. 1 von dem Schlitten 21 ausgehend schräg nach rechts oben erstreckt.

Zwischen den Wangen ist ein aus Blech gefertigter Kasten 38 angeordnet, der an dem zweiten Schlitten 25 befestigt ist und dessen Bewegung in Richtung der y-Koordinate 26 folgt.

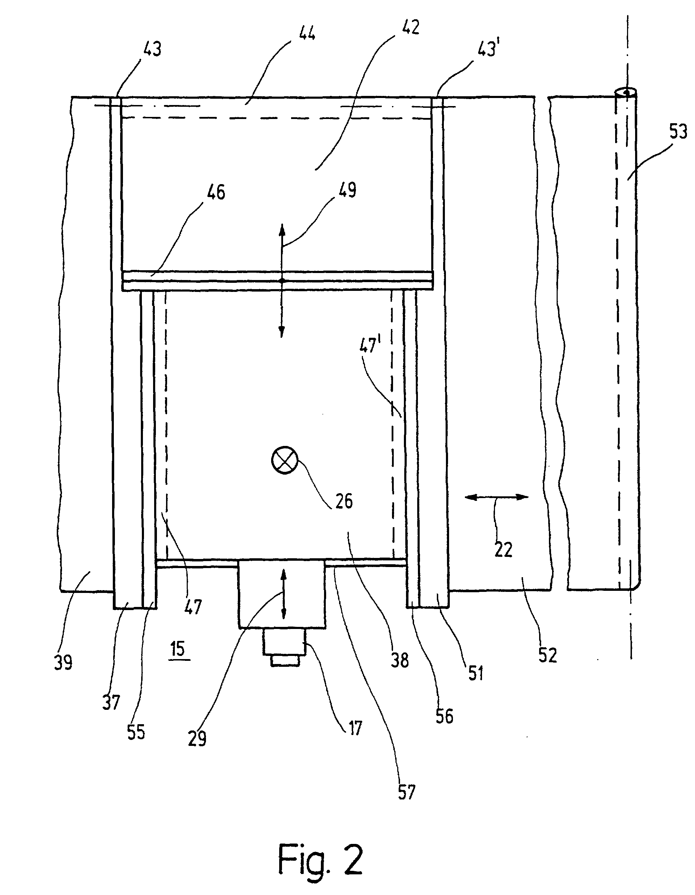

An der Wange 37 ist eine seitliche Rolloabdeckung 39 vorgesehen, von der in Fig. 1 lediglich der Befestigungsbereich an der Wange 37 zu sehen ist. An der anderen Wange ist eine entsprechende Rolloabdeckung vorgesehen, die in Fig. 2 zu sehen ist.

Zwischen den seitlichen Rolloabdeckungen ist noch eine obere Rolloabdeckung 42 vorgesehen, die an dem oberen Ende 43 der Wange 37 eine Rolle 44 aufweist. Die obere Rolloabdeckung 42 ist mit ihrem unteren freien Ende 45 an einer Abstreiferschiene 46 befestigt, die über eine senkrechte Nut 47 in noch zu beschreibender Weise an dem Kasten 38 gelagert ist. Die Abstreiferschiene 46 ist ferner auch an der Wange 37 gelagert, so daß sie sich beim Verfahren des Kastens 38 gegenüber der Wange 37 einerseits am Kasten 38 nach oben bzw. nach unten sowie andererseits längs der Wange 37 bewegt. Die obere Rolloabdeckung 42 wird dabei längs eines Pfeiles 49 ausgefahren bzw. eingefahren, wobei sich ihre Neigung jedoch nicht ändert.

Aus dem Kasten 38 fährt nach unten ein Rohr 50 aus, das die Spindel 17 sowie in Fig. 1 nicht gezeigte Werkzeugwechsler schützt, die um die Spindel 17 herum angeordnet sind.

In Fig. 2 ist in einer Draufsicht in Fig. 1 von rechts auf den Arbeitsraum 15 der Werkzeugmaschine 10 die Anordnung der einzelnen Rolloabdeckungen besser zu erkennen.

In Fig. 2 ist zunächst zu sehen, daß auf der rechten Seite des Kastens 38 eine weitere Wange 51 angeordnet ist, an der eine weitere seitliche Rolloabdeckung 52 befestigt ist, die auf eine bei 53 angedeutete Rolle aufwickelbar bzw. von dieser abwickelbar ist.

Aus Gründen der Übersichtlichkeit ist die für linke seitliche Rolloabdeckung 39 vorgesehene Rolle in Fig. 2 nicht gezeigt.

Fig. 2 ergibt ferner, daß die Rolle 44 der oberen Rolloabdeckung 42 zwischen den beiden oberen Enden 43, 43' der Wangen 37 und 51 drehbar gelagert ist. Die Breite der Rolloabdeckung 42 ist dabei so gewählt, daß sie nicht nur den Kasten 38 sondern auch noch zumindest teilweise die Wangen 37, 51 mit überdeckt, an denen sie auch quasi anliegt.

Zwischen den Wangen 37 bzw. 51 sowie dem Kasten 38 sind ferner noch Abstreiferschienen 55, 56 vorgesehen, die in dem nicht durch die Rolloabdeckung 42 geschützten Bereich für eine gute Abdichtung zwischen den Wangen 37, 51 sowie dem Kasten 38 sorgen.

Im Vergleich zwischen den Fig. 1 und 2 ergibt sich, daß der Kasten 38 zwischen den beiden Wangen 37, 51 hin- und herfährt, wobei die obere Lücke zwischen dem Kasten 38 einerseits sowie den beiden Wangen 37, 51 andererseits durch die obere Rolloabdeckung 42 geschlossen wird. Beidseits der Wangen 37, 51 sorgen die seitlichen Rolloabdeckungen 39 bzw. 52 für eine Abdichtung des Arbeitsraumes 15 nach schräg links oben in Fig. 1.

Zwischen den beiden Wangen 37 und 51 gibt es im unteren Bereich eine weitere Lücke, die von einem Blech 57 verschlossen ist, das den Kasten 38 nach unten abschließt und sich nach hinten unter den ersten Schlitten 21 erstreckt. In diesem Abdeckblech 57 ist eine Öffnung vorgesehen, die gerade so groß ist, daß das Rohr 50 ein- und ausgefahren werden kann.

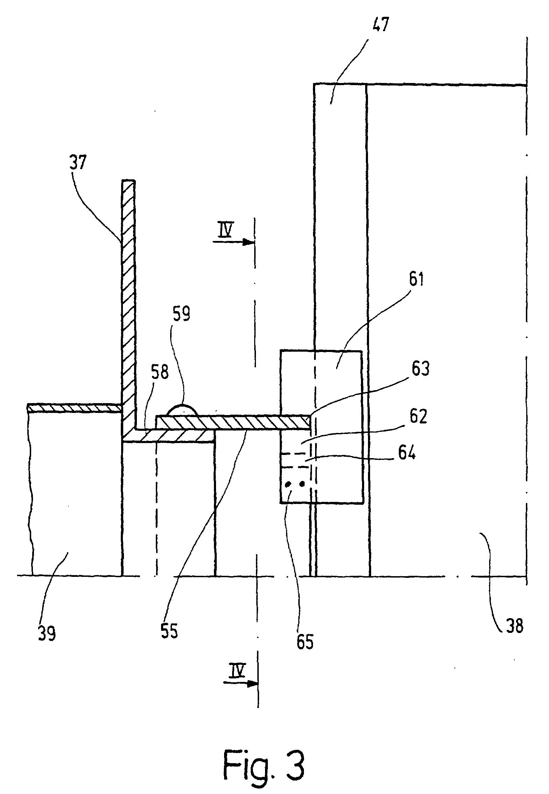

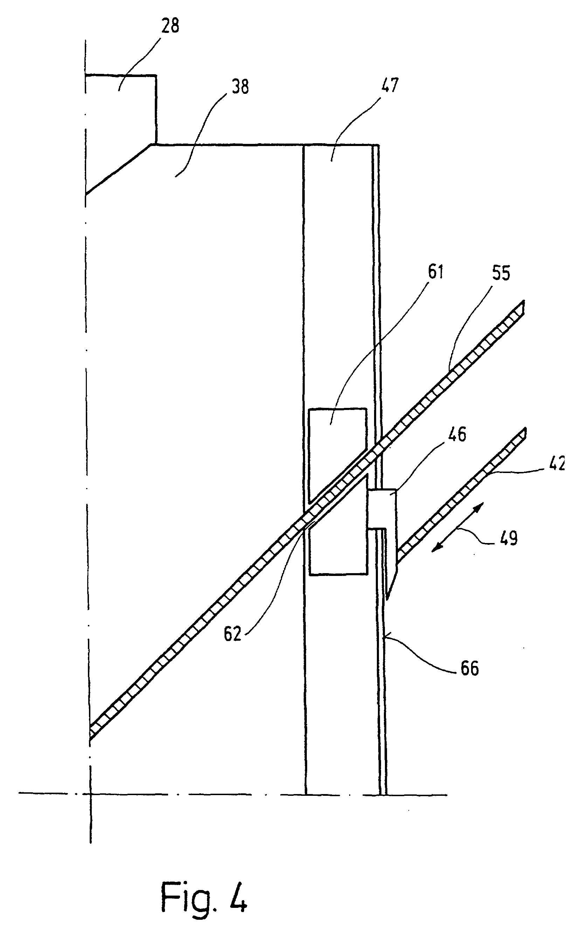

Wie die Konstruktion im Bereich des Überganges zwischen den Wangen 37, 51 sowie dem Kasten 38 gewählt ist, soll jetzt anhand der Fig. 3 und 4 erörtert werden.

In Fig. 3 ist in einer Schnittdarstellung längs der Linie III-III aus Fig. 1 zunächst zu erkennen, daß die Wange 37 im Querschnitt L-förmig ausgebildet ist und an ihrem kurzen Arm 58 die Abstreiferschiene 55 trägt, die über eine Schraube 59 befestigt und bezüglich ihres Abstandes zum Kasten 38 einstellbar ist.

In der senkrechten Nut 57 an dem Kasten 38 ist höhenverschieblich ein Nutenstein 61 gelagert, in dem ein schräger Schlitz 62 vorgesehen ist, dessen obere Öffnung 63 sowie untere Öffnung 64 in Fig. 3 angedeutet sind. In diesem schrägen Schlitz 62 läuft das freie äußere Ende der Abstreiferschiene 55.

Diese Anordnung ist in Fig. 4 noch einmal als Schnitt längs der Linie IV-IV aus Fig. 3 dargestellt. Hier ist jetzt auch die Abstreiferschiene 46 besser zu erkennen, an der die obere Rolloabdeckung 42 befestigt ist. Diese Abstreiferschiene 46 ist an in Fig. 3 schematisch bei 65 gezeigten Befestigungspunkten an dem Nutenstein 61 befestigt und liegt an einer vorderen Seite 66 des Kastens 38 an.

Wenn jetzt in Fig. 4 der Kasten 38 nach rechts verschoben wird, so gleitet der Nutenstein 61 auf der Abstreiferschiene 55 nach rechts oben, verschiebt sich also in der senkrechten Nut 47 nach oben. Die Rolloabdeckung 42 wird dabei längs des Pfeiles 49 aufgewickelt, wobei die parallele Ausrichtung zu der Abstreiferschiene 55 erhalten bleibt. Der Abstand zwischen Abstreiferschiene 55 und Rollofläche ist hier übertrieben dargestellt, der Luftspalt ist jedoch in der Praxis so gering, daß Späne nicht hindurchgelangen können.

Wird der Kasten 38 dagegen in Fig. 4 nach links bewegt, so gleitet der Nutenstein 61 auf der Abstreiferschiene 55 nach links unten, bewegt sich also in der Nut 47 nach unten, wobei er die Abstreiferschiene 46 mitnimmt, so daß die Rolloabdeckung 42 längs des Pfeiles 49 ausgezogen wird.

Selbstverständlich ist auf der rechten Seite des Kasten 38 eine ähnliche Anordnung mit einem vergleichbaren, allerdings spiegelbildlich ausgebildeten Nutenstein vorgesehen.

Es sei noch erwähnt, daß die Nutensteine 61 aus Kunststoff, vorzugsweise aus Polyamid gefertigt sind. Ferner sind auch die Abstreiferschienen 55, 56 aus Kunststoff gefertigt, während die Abstreiferschiene 46 vorzugsweise aus Blech gebogen ist.

## Patentansprüche

1. Werkzeugmaschine mit einem eine Aufspannfläche (14) für zu bearbeitende Werkstücke (12) aufweisenden Werkstücktisch (13), einem in einem Arbeitsraum (15) oberhalb des Werkstücktisches (13) relativ zu diesem über eine Verschiebemechanik (19) verfahrbaren Spindelkopf (16) mit einer Werkzeuge (18) zur Bearbeitung der Werkstücke (12) aufnehmenden Spindel (17), und drei orthogonal zueinander bewegbaren Schlitten (21, 25, 28) in der Verschiebemechanik (19), von denen der zweite Schlitten (25) verfahrbar an dem ersten (21) und der dritte Schlitten (28) verfahrbar an dem zweiten Schlitten (25) gelagert ist, wobei der Spindelkopf (16) mit dem dritten Schlitten (28) verbunden und der erste Schlitten (21) oberhalb der Aufspannfläche (14) angeordnet ist,
**dadurch gekennzeichnet, daß** der erste Schlitten (21) hinter dem Arbeitsraum (15) und an dem ersten Schlitten (21) zu beiden Seiten je eine Rolloabdeckung (39, 52) angeordnet ist, die sich beim Verfahren des ersten Schlittens (21) auf- bzw. abwickelt und mit ihrer Rollofläche den Arbeitsraum (15) abdeckt.

2. Werkzeugmaschine nach Anspruch 1, **dadurch gekennzeichnet, daß** der erste Schlitten (21) oberhalb des Arbeitsraumes (15) angeordnet ist.

3. Werkzeugmaschine nach Anspruch 1 oder 2, **dadurch gekennzeichnet, daß** zu beiden Seiten des ersten Schlittens (21) je eine bis zum oberen Ende des Arbeitsraumes (15) reichende Wange (37, 51) angeordnet ist, an der jeweils die zugeordnete Rolloabdeckung (39, 52) mit ihrem freien Ende befestigt ist, wobei die Rolloabdeckung (39, 52) sich jeweils auf eine jeweils an einer äußeren Seite des Arbeitsraumes (15) angeordnete Rolle (53) aufwickelt.

4. Werkzeugmaschine nach Anspruch 3, **dadurch gekennzeichnet, daß** der Spindelkopf (16) von einem an dem zweiten Schlitten (25) befestigten Kasten (38) umgeben ist, aus dem der Spindelkopf (16) nach unten zumindest teilweise ausfahrbar ist, und der zwischen den Wangen (37, 51) in Richtung der Bewegung des zweiten Schlittens (25) in den Arbeitsraum (15) verfahrbar ist.

5. Werkzeugmaschine nach Anspruch 4, **dadurch gekennzeichnet, daß** die Wangen (37, 51) jeweils einen Abstreifer (55, 56) aufweisen, der an dem fahrenden Kasten (38) anliegt.

6. Werkzeugmaschine nach einem der Ansprüche 3 bis 5, **dadurch gekennzeichnet, daß** die Wangen (37, 51) sowie die Rolloflächen schräg nach oben und vorne verlaufen, so daß die Rolloabdeckungen (39, 52) den Arbeitsraum (15) schräg nach oben und hinten abdecken.

7. Werkzeugmaschine nach einem der Ansprüche 3 bis 6, **dadurch gekennzeichnet, daß** zwischen den Wangen (37, 51) an deren vorderen, oberen Enden (43, 43') eine Rolle (44) einer weiteren Rolloabdeckung (42) angeordnet ist, die mit ihrem freien Ende (45) an dem Kasten (38) geführt ist und mit ihrer Rollofläche für eine Abdichtung des Arbeitsraumes (15) oberhalb des Kastens (38) sorgt.

8. Werkzeugmaschine nach Anspruch 7, **dadurch gekennzeichnet, daß** das freie Ende (45) der weiteren Rolloabdeckung (42) an einer Abstreiferschiene (46) befestigt ist, die höhenverschiebbar an dem Kasten (38) gelagert sowie an den Wangen (37, 51) in deren Längsrichtung verschieblich geführt ist.

9. Werkzeugmaschine nach Anspruch 8, **dadurch gekennzeichnet, daß** die Abstreiferschiene (46) an zwei Nutensteinen (61) befestigt ist, die jeweils in einer senkrechten Nut (47, 47') an dem Kasten (38) gelagert sind und einen schrägen Schlitz (62) aufweisen, in den jeweils eine Abstreiferschiene (55, 56) eingreift, die vorzugsweise seitlich verstellbar an der jeweiligen Wange (37, 51) befestigt ist.

10. Werkzeugmaschine nach einem der Ansprüche 1 bis 9, **dadurch gekennzeichnet, daß** die Rolloabdeckungen (39, 42, 52) sich unter Federspannung auf die jeweilige Rolle (44, 53) aufwickeln.

11. Werkzeugmaschine nach einem der Ansprüche 3 bis 9, **dadurch gekennzeichnet, daß** die Rollen (44, 53) antriebsmäßig mit dem zugeordneten Schlitten (21, 25) verbunden sind.

12. Werkzeugmaschine nach einem der Ansprüche 4 bis 11, **dadurch gekennzeichnet, daß** an dem dritten Schlitten (38) ein Rohr (50) befestigt ist, das den Spindelkopf (16) umgibt und sich bei dessen Verfahren in einer passend ausgelegten, unteren Öffnung in dem Kasten (38) verschiebt.

13. Werkzeugmaschine nach Anspruch 12, **dadurch gekennzeichnet, daß** ein unteres Abdeckblech (57) des Kastens (38) vorgesehen ist, das sich zwischen den Wangen (37, 51) nach hinten unter den ersten Schlitten (21) erstreckt.

14. Werkzeugmaschine nach einem der Ansprüche 1 bis 13, **dadurch gekennzeichnet, daß** eine Verkleidung (11, 36) vorgesehen ist, die den Arbeitsraum (15) gegenüber der Werkzeugmaschine sowie nach außen abdichtet und zumindest eine seitliche Servicetür (31) aufweist, die von außerhalb des Arbeitsraumes (15) zugänglich ist.

15. Werkzeugmaschine nach Anspruch 14, **dadurch gekennzeichnet, daß** sie über Rollen (32, 33) verfahrbar ist, die im Betrieb der Werkzeugmaschine unwirksam gemacht sind, und daß die Werkzeugmaschine auf justierbaren Ständern (34, 35) steht.

16. Werkzeugmaschine nach Anspruch 15, **dadurch gekennzeichnet, daß** zum Verfahren der Werkzeugmaschine (10) die Rollen (32, 33) ausgefahren bzw. die Ständer (34, 35) eingezogen werden.

## Claims

1. A machine tool comprising a workpiece table (13) which has a clamping surface (14) for workpieces (12) to be machined, a spindle head (16) which is displaceable in a working space (15) above the workpiece table (13) relative thereto by means of a shifting mechanism (19) and which has a spindle (17) receiving tools (18) for machining the workpieces (12), said shifting mechanism (19) including three carriages (21, 25, 28) movable orthogonally to one another, of which the second carriage (25) is mounted displaceably on the first (21), and the third carriage (28) displaceably on the second carriage (25), the spindle head (16) being joined to the third carriage (28), wherein the first carriage (21) is arranged above the clamping surface (14),
**characterized in that** the first carriage (21) is arranged behind the working space (15) and that each a roller-shade cover (39, 52) which winds up and unwinds upon a displacement of the first carriage (21) and covers the working space (15) with its roller-shade surface, is arranged on both sides of the first carriage (21).

2. The machine tool of claim 1, **characterized in that** the first carriage (21) is arranged above the working space (15).

3. The machine tool of claim 1 or claim 2, **characterized in that** on both sides of the first carriage (21) there is arranged each a cheekpiece (37, 51) extending to the upper end of the working space (15), on which cheekpiece the respective associated roller-shade cover (39, 52) is attached with its free end, whereby the respective roller-shade cover (39, 52) is wound onto a respective roller (53) arranged on a respective outer side of the working space (15).

4. The machine tool of claim 3, **characterized in that** the spindle head (16) is surrounded by a box (38), attached to the second carriage (25), from which box the spindle head (16) can be at least partly extended downward, and which box is displaceable between the cheekpieces (37, 51) into the working space (15) in the movement direction of the second carriage (25).

5. The machine tool of claim 4, **characterized in that** the cheekpieces (37, 51) each have a wiper (55, 56) which rests against the moving box (38).

6. The machine tool of any of claims 3 - 5, **characterized in that** the cheekpieces (37, 51) as well as the roller-shade surfaces extend obliquely upward and to the front, so that the roller-shade covers (39, 52) cover the working space (15) obliquely upward and to the rear.

7. The machine tool of any of claims 3 - 6, **characterized in that** a roller (44) of a further roller-shade cover (42), which is guided with its free end (45) on the box (38) and with its roller-shade surface provides sealing of the working space (15) above the box (38), is arranged between the cheekpieces (37, 51) at their front upper ends (43, 43').

8. The machine tool of claim 7, **characterized in that** the free end (45) of the further roller-shade cover (42) is attached to a wiper bar (46) which is mounted on the box (38) in vertically displaceable fashion and is guided on the cheekpieces (37, 51) displaceably in the longitudinal direction thereof.

9. The machine tool of claim 8, **characterized in that** the wiper bar (46) is attached to two slide blocks (61) which are each mounted in a vertical groove (47, 47') on the box (38) and each have an oblique slot (62) into which engages each a wiper bar (55, 56) which is attached to the respective cheekpiece (37, 51) preferably displaceably to the side.

10. The machine tool of any of claims 1 - 9, **characterized in that** the roller-shade covers (39, 42, 52) wind onto the respective roller (44, 53) under spring tension.

11. The machine tool of any of claims 3 - 9, **characterized in that** the rollers (44, 53) are drive-coupled to the associated carriage (21, 25).

12. The machine tool of any of claims 4 - 11, **characterized in that** a tube (15) is attached to the third carriage (38), said tube surrounding the spindle head (16) and shifting within a lower fitting opening in the box (38) upon displacement of the spindle head.

13. The machine tool of claim 12, **characterized in that** a lower cover panel (57) of the box (38) is provided, which panel extends between the cheekpieces (37, 51) to the rear beneath the first carriage (21).

14. The machine tool of any of claims 1 - 13, **characterized in that** an enclosure (11, 56) is provided which seals the working space (15) with respect to the machine tool as well as toward the outside, and has at least one lateral service door (31) that is accessible from outside the working space (15).

15. The machine tool of claim 14, **characterized in that** it is displaceable on casters (32, 33) which are made inactive during operation of the machine tool, and that the machine tool stands on adjustable feets (34, 35).

16. The machine tool of claim 15, **characterized in that** for displacement of the machine tool (10) the casters (32, 33) are extended and the feet (34, 35) are retracted, respectively.

## Revendications

1. Machine-outil comportant une table porte-pièce (13) qui présente une surface de bridage (14) pour des pièces (12) à usiner, une tête de broche (16) qui est déplaçable dans un espace de travail (15) au-dessus de la table porte-pièce (13), par rapport à celle-ci, au moyen d'un mécanisme de coulissement (19) et qui comporte une broche (17) recevant des outils (18) pour l'usinage des pièces (12), ainsi que trois chariots (21, 25, 28) déplaçables orthogonalement l'un par rapport à l'autre dans le mécanisme de coulissement (19), dont le deuxième chariot (25) est monté déplaçable sur le premier chariot (21), et le troisième chariot (28) est monté déplaçable sur le deuxième chariot (25), la tête de broche (16) étant reliée au troisième chariot (28) et le premier chariot (21) étant disposé au-dessus de la surface de bridage (14),
**caractérisée en ce que** le premier chariot (21) est disposé derrière l'espace de travail (15) et sur chacun des deux côtés du premier chariot (21) est disposé un capot à enroulement (39, 52) qui, pendant le déplacement du premier chariot (21), s'enroule, respectivement se déroule et recouvre l'espace de travail (15) par sa surface de capot à enroulement.

2. Machine-outil selon la revendication 1, **caractérisée en ce que** le premier chariot (21) est disposé au-dessus de l'espace de travail (15).

3. Machine-outil selon la revendication 1 ou 2, **caractérisée en ce que** sur chacun des deux côtés du premier chariot (21) est disposée une joue (37, 51) qui s'étend jusqu'à l'extrémité supérieure de l'espace de travail (15) et à laquelle est fixé le capot à enroulement (39, 52) correspondant, par son extrémité libre, le capot à enroulement (39, 52) s'enroulant dans chaque cas sur un rouleau (53) disposé sur un côté extérieur de l'espace de travail (15).

4. Machine-outil selon la revendication 3, **caractérisée en ce que** la tête de broche (16) est entourée par un caisson, fixé au deuxième chariot (25), duquel la tête de broche (16) peut être extraite au moins partiellement vers le bas, et qui est déplaçable entre les joues (37, 51) dans le sens du déplacement du deuxième chariot (25) dans l'espace de travail (15).

5. Machine-outil selon la revendication 4, **caractérisée en ce que** les joues (37, 51) comportent chacune un racleur (55, 56) qui s'applique contre le caisson (38) déplaçable.

6. Machine-outil selon l'une des revendications 3 à 5, **caractérisée en ce que** les joues (37, 51) ainsi que les surfaces de capot à enroulement s'étendent obliquement vers le haut et vers l'avant, ce qui fait que les capots à enroulement (39, 52) recouvrent obliquement vers le haut et vers l'arrière l'espace de travail (15).

7. Machine-outil selon l'une des revendications 3 à 6, **caractérisée en ce qu'**entre les joues (37, 51), à leurs extrémités supérieures et avant (43, 43'), est disposé un rouleau (44) d'un autre capot à enroulement (42), lequel rouleau est guidé par son extrémité libre (45) sur le caisson (38) et assure, par sa surface de capot à enroulement, une étanchéité de l'espace de travail (15) au-dessus du caisson (38).

8. Machine-outil selon la revendication 7, **caractérisée en ce que** l'extrémité libre (45) de l'autre capot à enroulement (42) est fixée à un rail de raclage (46) qui est monté de manière à pouvoir coulisser en hauteur sur le caisson (38), et qui est guidé coulissant sur les joues (37, 51), dans leur direction longitudinale.

9. Machine-outil selon la revendication 8, **caractérisée en ce que** le rail de raclage (46) est fixé à deux coulisseaux (61) qui sont montés chacun dans une rainure verticale (47, 47') sur le caisson (38) et qui présentent une fente oblique (62), dans laquelle s'engage respectivement un rail de raclage (55, 56) qui est fixé à la joue (37, 51) respective, de préférence de manière déplaçable latéralement.

10. Machine-outil selon l'une des revendications 1 à 9, **caractérisée en ce que** les capots à enroulement (39, 42, 52) s'enroulent sur le rouleau (44, 53) respectif, par tension d'un ressort.

11. Machine-outil selon l'une des revendications 3 à 9, **caractérisée en ce que** les rouleaux (44, 53) sont reliés en entraînement au chariot (21, 25) associé.

12. Machine-outil selon l'une des revendications 4 à 11, **caractérisée en ce qu'**au troisième chariot (38) est fixé un tube (50) qui entoure la tête de broche (16) et qui, pendant son déplacement, coulisse dans une ouverture inférieure du caisson (38), de dimensions adaptées.

13. Machine-outil selon la revendication 12, **caractérisée en ce qu'**il est prévu une tôle de couverture inférieure (57) du caisson (38), qui s'étend entre les joues (37, 51) vers l'arrière, au-dessous du premier chariot (21).

14. Machine-outil selon l'une des revendications 1 à 13, **caractérisée en ce qu'**il est prévu un revêtement (11, 36) qui rend étanche l'espace de travail (15) par rapport à la machine-outil ainsi que vers l'extérieur, et qui comporte au moins une porte de maintenance latérale (31) qui est accessible depuis l'extérieur de l'espace de travail (15).

15. Machine-outil selon la revendication 14, **caractérisée en ce qu'**elle est déplaçable au moyen de rouleaux (32, 33) qui sont rendus inopérants pendant le fonctionnement de la machine-outil, et **en ce que** la machine-outil est placée sur des montants (34, 35) ajustables.

16. Machine-outil selon la revendication 15, **caractérisée en ce que** pour le déplacement de la machine-outil (10), les rouleaux (32, 33) peuvent être sortis, respectivement les montants (34, 35) peuvent être rentrés.
